(19) Europäisches Patentamt
European Patent Office
Office européen des brevets

(11) Veröffentlichungsnummer: **0 299 921**
**B1**

(12) # EUROPÄISCHE PATENTSCHRIFT

(45) Veröffentlichungstag der Patentschrift: **06.02.91**

(51) Int. Cl.$^5$: **C 09 B 29/01,** C 09 K 9/02

(21) Anmeldenummer: **88810464.3**

(22) Anmeldetag: **07.07.88**

(54) **Amphiphile Azofarbstoffe zur Herstellung von ultradünnen Schichten mit reversiblen Farbänderungen.**

(30) Priorität: **13.07.87 CH 2656/87**

(43) Veröffentlichungstag der Anmeldung:
**18.01.89 Patentblatt 89/03**

(45) Bekanntmachung des Hinweises auf die Patenterteilung:
**06.02.91 Patentblatt 91/06**

(84) Benannte Vertragsstaaten:
**CH DE FR GB IT LI NL**

(56) Entgegenhaltungen:
**GB-A- 953 719**
**US-A-3 148 179**

(73) Patentinhaber: **CIBA-GEIGY AG**
**Klybeckstrasse 141**
**CH-4002 Basel (CH)**

(72) Erfinder: **Decher, Gero, Dr.**
**Rheinstrasse 9**
**D-6229 Walluf (DE)**
Erfinder: **Tieke, Bernd, Dr.**
**Route Bel-Air 22**
**CH-1723 Marly (CH)**

**EP 0 299 921 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft neue amphiphile Azofarbstoffe, die Zwischenprodukte für solche Azofarbstoffe, molekulare Aggregate aus den Azofarbstoffen und die Verwendung dieser Aggregate als optische Sensoren.

Amphiphile Azobenzole sind bekannt. Die Eignung solcher Azobenzole mit quaternären Ammoniumgruppen zum Aufbau geordneter Strukturen wird von T. Kunitake et al. in Thin Solid Films, *121* L89—91 (1984) und von M. Shimomura et al. in Ber. Bunsenges. Phys. Chem., *87*, 1134—1143 (1983) beschrieben. Langmuir-Blodgett Schichtsysteme aus Mononitroazobenzolen sind aus SPIE Vol. 682, 97—102 bzw. 160—169 (1986) bekannt.

Thermo- und Solvatochromie in Multischichtsystemen, die nach dem Langmuir-Blodgett Verfahren aufgebaut sind (LB-Schichten), werden von S. Imazeki et al. in Thin Solid Films, *134*, 27—34 (1985) beschrieben. Dabei handelt es sich um Schichten aus Merocyaninfarbstoffen.

Bislang sind nur wenige reversible Vorgänge in LB-Multischichten bekannt, da solche Schichtsysteme in der Regel nur geringe Molekülbewegungen erlauben, ohne dass die Anordnung zerstört wird. Bislang konnte Thermochromie in LB-Schichten nur in einer Richtung, d.h. beim Aufheizen, beobachtet werden. Es war daher überraschend zu finden, dass ausgewählte amphiphile Azobenzolfarbstoffe in solchen Schichtsystemen oder in anderen Systemen enthaltend Membran-Doppelschichten, reversible Thermo- und Solvatochromie zeigen, und dass die Umwandlung beim Aufheizen sehr rasch erfolgt.

Die vorliegende Erfindung betrifft Verbindungen der Formel I

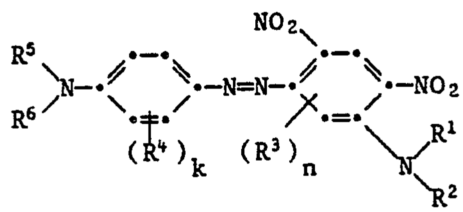

(I),

worin $R^1$ $C_{12}$-$C_{30}$Alkyl ist, $R^2$ Wasserstoff oder $C_1$—$C_{30}$Alkyl bedeutet, $R^3$ $C_1$—$C_3$Alkyl oder $C_1$—$C_3$Alkoxy ist, $R^4$ eine der Bedeutungen von $R^3$ annehmen kann oder Halogen ist, k und n unabhängig voneinander 0, 1 oder 2 sind und $R^5$ und $R^6$ unabhängig voneinander $C_1$—$C_4$Alkyl sind, wobei irgendwelche Alkylreste auch teil- oder perfluoriert sein können, mit der Massgabe, dass $R^1$ Alkyl mit wenigstens 18 C-Atomen ist, wenn $R^2$ Wasserstoff oder Alkyl mit weniger als 12 C-Atomen bedeutet. Bedeuten irgendwelche Reste Alkyl, so kann es sich dabei um geradkettige oder verzweigte Reste handeln. Bevorzugt werden geradkettige Reste.

Ferner können die Alkylreste teil- oder perfluoriert sein oder sie können eine oder mehrere trans-Doppelbindungen oder Dreifachbindungen aufweisen, die nicht in 1-Position stehen. Mehrere trans-Doppelbindungen oder Dreifachbindungen können isoliert oder miteinander konjugiert sein.

Spezifische Beispiele für Alkylreste sind Methyl, Ethyl, n-Propyl, Isopropyl, n-Butyl, Isobutyl, n-Pentyl, n-Hexyl, n-Heptyl, n-Octyl, 2-Ethylhexyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl, n-Eicosyl, n-Heneicosyl, n-Docosyl, n-Tetracosyl, n-Hexacosyl, n-Octacosyl und n-Triacontyl, sowie die entsprechenden perfluorierten Derivate oder Allyl, Propargyl, Octadec-9-trans-enyl oder Octadec-9,11-diinyl.

$R^3$ und $R^4$ als $C_1$—$C_3$Alkyl sind beispielsweise Methyl, Ethyl oder n-Propyl bevorzugt Methyl,

$R^3$ und $R^4$ als $C_1$—$C_3$Alkoxy sind beispielsweise Methoxy, Ethoxy oder n-Propoxy, bevorzugt Methoxy.

$R^4$ als Halogen ist Fluor, Chlor, Brom oder Iod, bevorzugt Brom oder Chlor.

$R^5$ und $R^6$ als $C_1$—$C_4$Alkyl sind vorzugsweise Methyl, Ethyl, n-Propyl oder n-Butyl, besonders bevorzugt Methyl.

$R^2$ ist vorzugsweise $C_1$—$C_{30}$Alkyl.

Bei $R^1$ und $R^2$ handelt es sich bevorzugt um Reste der Formel —$C_pH_{2p+1}$—, worin p 12—30, bevorzugt 16—26, ganz besonders bevorzugt 18—22 ist. Solche Reste sind bevorzugt geradkettig.

$R^1$ und $R^2$ müssen eine gewisse Mindestlänge aufweisen, damit sich aus Verbindungen der Formel I auf der Wasseroberfläche stabile monomolekulare Filme ausbilden lassen. Handelt es sich bei $R^2$ um Wasserstoff oder um einen kurzkettigen Alkylrest mit weniger als 12 C-Atomen, so muss $R^1$ wenigstens 18 C-Atome aufweisen.

Bevorzugt werden Verbindungen der Formel I, worin $R^1$ und $R^2$ die gleiche Anzahl an Kohlenstoffatomen aufweisen.

Die Indizes k und n sind vorzugsweise 0 oder 1, ganz besonders bevorzugt beide 0.

Bevorzugt werden Verbindungen der Formel I, worin $R^1$ und $R^2$ unabhängig voneinander n—$C_{16}$—$C_{26}$Alkyl sind und $R^5$ und $R^6$ Methyl bedeuten.

Besonders bevorzugt werden Verbindungen der Formel I, worin $R^1$ und $R^2$ unabhängig voneinander ein Rest der Formel —$C_qH_{2q+1}$ sind und q eine ganze Zahl von 16—26 bedeutet.

Ganz besonders bevorzugt werden Verbindungen der Formel I, worin q eine ganze Zahl von 18—22 ist.

Die Verbindungen der Formel I lassen sich in an sich bekannter Weise durch Kupplung von Diazoniumverbindungen IIa mit Aminen IIb gemäss folgendem Schema erhalten:

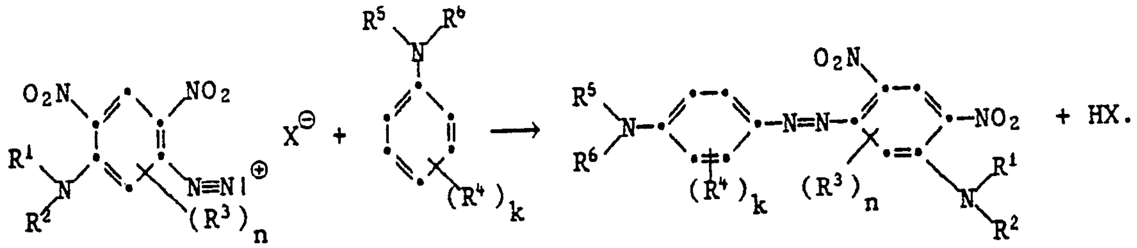

(IIa) (IIb) (I)

In den Formeln I, IIa und IIb haben $R^1$—$R^6$, k und n die weiter oben definierte Bedeutung und X ist ein beliebiges Anion.

Die Diazoniumverbindungen der Formel IIa lassen sich in an sich bekannter Weise aus primären Aminen der Formel II gemäss folgendem Schema herstellen:

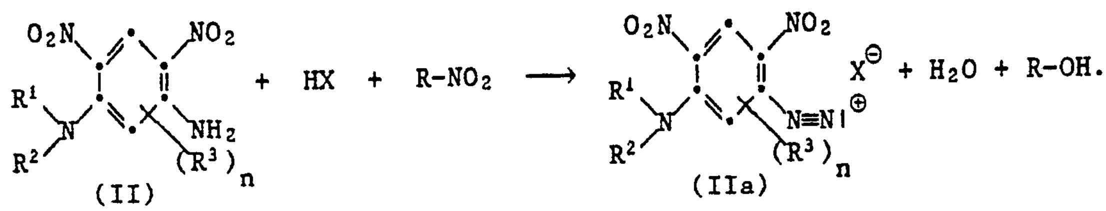

(II) (IIa)

Die Verbindungen der Formel II sind neu und ebenfalls Gegenstand der Erfindung.

Diese Verbindungen können in an sich bekannter Weise durch Umsetzung von Dinitrohalogenbenzolen III mit primären oder sekundären Aminen IV gemäss folgendem Schema erhalten werden:

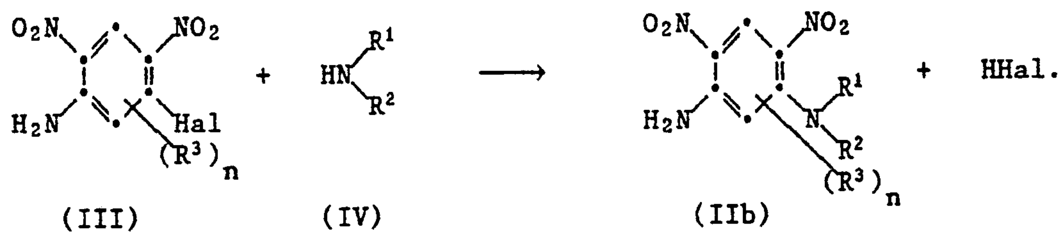

(III) (IV) (IIb)

Dabei besitzen $R^1$, $R^2$, $R^3$ und n die weiter oben gegebenen Bedeutungen und Hal ist Fluor, Chlor oder Brom, bevorzugt Fluor.

Die Verbindungen der Formeln III und IV sind an sich bekannt und teilweise im Handel erhältlich.

Nicht käufliche Verbindungen der Formeln III und IV lassen sich nach Standardreaktionen der organischen Chemie herstellen.

So lassen sich die 3-Halogen-4,6-dinitroaniline der Formel III beispielsweise erhalten, indem man 1,3-Dihalogenbenzole durch Dinitrierung in die entsprechenden 1,3-Dihalogen-4,6-dinitrobenzole überführt und anschliessend ein Halogenatom durch eine Aminogruppe austauscht. Beispiele für solche Reaktionen findet man in Houben-Weyl, Methoden der organischen Chemie, Band X/1, S. 513 und Band XI/1, S. 63 (Georg Thieme Verlag, Stuttgart, 1971).

Primäre Amine der Formel IV erhält man beispielsweise durch Alkylierung von Phthalimiden gefolgt von der Hydrolyse zu den Aminen.

Sekundäre Amine der Formel IV erhält man beispielsweise durch Reduktion von einfach N-alkylierten Säureamiden mit $LiAlH_4$.

Die Diazotierung der Verbindung der Formel II erfolgt in der Regel in einem inerten, organischen Lösungsmittel, bevorzugt Diethylether. Bei dieser Variante setzt man in der Regel organische Nitrite $RNO_2$ ein. Bevorzugt wird Isoamylnitrit.

Als Säure HX verwendet man bevorzugt Mineralsäuren, beispielsweise Perchlorsäure, $HBF_4$ oder bevorzugt Schwefelsäure.

Die Kupplung mit dem Amin erfolgt in der Regel ohne weitere Isolierung der Diazoniumverbindung.

Die Umsetzung der Verbindungen III und IV wird zweckmässigerweise in einem inerten, organischen Lösungsmittel vorgenommen. Vorzugsweise verwendet man Gemische von polaren, aprotischen

Lösungsmitteln mit halogenierten Kohlenwasserstoffen, beispielsweise ein 1:1 Gemisch (Gewichtsteile) von Dimethylformamid und Chloroform. In der Regel setzt man eine ausreichende Menge einer Base zu, um das entstehende HHal zu neutralisieren.

Aus den Verbindungen der Formel I lassen sich ultradünne Schichten mit reversiblen thermochromen Eigenschaften herstellen. Die Dicke dieser Schichten kann bis hinunter zu einer Moleküllänge betragen. Je nach Anzahl und Länge der Kohlenwasserstoffreste $R^1$ und $R^2$ lassen sich Monoschichten an der Wasser/ Luft Grenzfläche ausbilden. Dazu trägt man in an sich bekannter Weise eine geringe Menge einer Lösung einer Verbindung der Formel I in einem vorzugsweise niedrigsiedenden und nicht mit Wasser mischbaren Lösungsmittel auf eine freie Wasseroberfläche auf, lässt das Lösungsmittel verdampfen und komprimiert den entstandenen Film, so dass eine stabile, monomolekulare Schicht auf der Wasseroberfläche entsteht.

Die Stabilität der Filme lässt sich bekanntermassen durch Wahl der experimentellen Parameter beeinflussen. So kann man beispielsweise Filme aus relativ kurzkettigen Verbindungen der Formel I durch Kühlen der Subphase stabilisieren oder man verwendet Verbindungen der Formel I in Kombination mit anderen amphiphilen Verbindungen, die monomolekulare Filme zu stablisieren vermögen. Beispiele für solche Verbindungen sind langkettige Carbonsäuren, wie Palmitinsäure, Stearinsäure, Arachinsäure oder Behensäure oder die Ester, insbesondere die Methylester, dieser Säuren; langkettige primäre Amine, wie n-Hexadecyl-, n-Octadecyl- oder n-Eicosylamin; langkettige Alkohole, wie n-Hexadecan-, n-Octadecan- oder n-Eicosanol; langkettige aliphatische Kohlenwasserstoffe, wie Hexadecan, Octadecan oder Eicosan; oder Steroide und Steroidderivate, wie Cholesterol. Neben gesättigten Derivaten können auch ethylenisch- oder acetylenisch ungesättigte Derivate dieser Verbindungen eingesetzt werden. Beispiele dafür sind ω-Tricosensäure oder deren Ester. Die Säuren werden vorzugsweise in Form von Salzen, insbesondere Cd-Salzen, eingesetzt.

Die Verbindungen der Formel I sind in der Regel zu wenigstens 1 Gew.%, bezogen auf die Gesamtmischung, in solchen Mischungen enthalten.

Monomolekulare Schichten auf der Wasseroberfläche lassen sich nach dem Langmuir-Blodgett Verfahren (LB-Verfahren) auf feste Träger übertragen. Dazu taucht man in an sich bekannter Weise einen festen Träger mit im wesentlichen glatter Oberfläche durch einen komprimierten, monomolekularen Film auf einer Wasseroberfläche und überträgt dadurch besagten Film auf den Träger.

Durch mehrmaliges Ein- und Austauchen lassen sich auf diese Weise Mehrschichtsysteme herstellen.

Die Schicht auf der Wasseroberfläche kann nach jedem Tauchvorgang ausgetauscht werden, so dass unterschiedliche Folgen von Schichten auf dem Träger herstellbar sind.

Je nach Polarität der Trägeroberfläche wird dieser beim ersten Tauchvorgang aus dem Wasser herausgezogen (hydrophiler Träger), so dass die polaren Azobenzolchromophore mit der polaren Trägeroberfläche in Kontakt sind, oder der Träger wird beim ersten Tauchvorgang durch die monomolekulare Schicht in das Wasser hinein getaucht (hydrophober Träger), so dass die hydrophoben Reste $R^1$ und $R^2$ mit der Trägeroberfläche in Kontakt sind. Diese Verfahrensweisen sind dem Fachmann auf dem Gebiet der LB-Systeme bekannt und beispielsweise in "Techniques Of Chemistry, Physical Methods Of Chemistry, Vol. I, Part 3B, S. 666—71; Editor: A. Weissberger, P. Rossiter" beschrieben.

Als feste Träger für das LB-Verfahren kommen unterschiedlichste Substrate mit mikroskopisch planarer Oberfläche in Frage. Beispiele dafür sind Metalle, wie Aluminium, Kupfer, Silber oder Gold, Halbleiter, wie Germanium, Silizium oder GaAs, anorganische Materialien, wie Glas, Quarz, ZnSe oder $Si_2N_3$ oder Kunststoffe, wie Teflon®, Polyethylen oder Polyester. Man kann auch hydrophobierte Träger benutzen, beispielsweise Glas oder Quarz, das mit Trichlormethylsilan, Dichlordimethylsilan oder Trichloroctadecylsilan vorbehandelt wurde.

Die Subphase, auf der die monomolekulare Schicht ausgebildet wird, besteht in der Regel aus mehrfach destilliertem Wasser, dem gegebenenfalls zur Stabilisierung der Filme geringe Mengen von Salzen, beispielsweise von $CdCl_2$ oder $BaCl_2$, zugesetzt sind. Ferner kann die Subphase Puffersubstanzen, beispielsweise $NaHCO_3$, enthalten. Diese Modifikationen sind dem Fachmann bekannt und werden je nach der Art der filmbildenden Substanzen ausgewählt.

Ueberraschenderweise lassen sich aus reinen Farbstoffmonoschichten Multischichten nach dem LB-Verfahren herstellen. Diese Schichten können unmittelbar aufeinander folgen oder es handelt sich um alternierende Schichten aus Farbstoffmonoschichten und anderen schichtbildenden Materialien. Man kann auch Mischschichten verwenden.

Bevorzugte Mischungen zur Herstellung solcher Schichtsysteme sind Gemische der Verbindung der Formel I, insbesondere des Derivates, worin $R^1$ und $R^2$ -n-$C_{18}H_{37}$ sind und $R^5$ und $R^6$ Methyl bedeuten, mit Arachinsäure oder mit Cholesterol.

Die Erfindung betrifft ein Verfahren zur Herstellung von Mono- oder Multischichtsystemen umfassend die Schritte

i) Herstellung einer monomolekularen Schicht einer Verbindung der Formel I oder eines Gemisches aus mindestens 1 Gew.%, bezogen auf die Gesamtmischung, dieser Verbindung in Kombination mit weiteren zur Ausbildung von stabilen monomolekularen Schichten befähigten amphiphilen Verbindungen und

ii) Uebertragung dieser Schicht auf einen festen Träger gemäss dem Langmuir-Blodgett Verfahren durch ein- oder mehrfaches Ein- und/oder Austauchen besagten Trägers durch die Schicht.

Aus den Verbindungen der Formel I lassen sich ferner Mischliposomen oder Kristallfilme herstellen.

Ein weiteres Verfahren gemäss der vorliegenden Erfindung betrifft die Herstellung von molekularen Aggregaten in Form von Mischliposomen; ein bevorzugtes Verfahren umfasst die Schritte

i) Einbringen einer Lösung einer Verbindung der Formel I in Kombination mit weiteren liposomenbildenden Verbindungen in ein wässriges Medium,

ii) Erzeugen eines homogenen Films aus dem liposomenbildenden Material durch Verdampfen des Lösungsmittels,

iii) Behandlung der Anordnung mit Ultraschall oder Quellung der liposomenbildenden Materialien oberhalb der Phasenumwandlungstemperatur, so dass sich Liposomen bilden und

iv) gegebenenfalls Uebertragung der Lösung auf einen festen Träger und Verdampfen des Wassers, so dass ein zusammenhängender Film aus Mischliposomen ("Cast Bilayer" Film) entsteht.

Die bei diesem Verfahren anwesenden weiteren liposomenbildenden Verbindungen sind dem Fachmann an sich bekannt. Beispiele für solche Verbindungen sind Dimethyldioctadecylammoniumbromid oder Dipalmitoylphosphatidylcholin.

Verfahrensweisen zur Liposomenherstellung sind beispielsweise angegeben in Liposome Technology, Vol. I, CRC-Press, Baton Rouge (1984) Editor: G. Gregoriadis.

Lösungen enthaltend Liposomen aus Verbindungen der Formel I oder deren Gemischen mit anderen amphiphilen Verbindungen können nach ihrer Herstellung zu Filmen vergossen werden und man erhält nach dem Verdampfen des Lösungsmittels sogenannte "Cast Bilayer" Filme. Diese Technik wird im oben erwähnten Artikel von T. Kunitake et al. beschrieben.

Ein weiterer Gegenstand der Erfindung ist ein Verfahren zur Herstellung von mikrokristallinen Filmen umfassend die Schritte

i) Aufbringen einer Verbindung der Formel I auf einem festen, bevorzugt hydrophoben, Träger,

ii) Aufschmelzen der Verbindung der Formel I,

iii) Kontaktieren dieser Anordnung mit einem zweiten festen, bevorzugt hydrophoben, Träger, so dass ein dünner Flüssigkeitsfilm zwischen besagten Trägern entsteht und

iv) Abkühlen des zusammengespressten Films unterhalb des Schmelzpunktes der Verbindung der Formel I.

Bei dieser Ausführungsform können die weiter oben erwähnten hydrophoben Träger verwendet werden, beispielsweise Kunststoffilme oder hydrophobierte Glasplatten. Auch ein Gemisch von Verbindungen der Formel I mit weiteren amphiphilen Verbindungen lässt sich nach diesem Verfahren verarbeiten.

In den LB-Filmen bilden sich Aggregate der Azoverbindungen der Formel I aus; das Absorptionsverhalten des Films wird von der Aggregationsform beeinflusst: Die Aggregation lässt sich überraschenderweise durch Wahl der Umgebungsbedingungen, wie Temperatur oder pH-Wert, reversibel steuern und macht sich durch eine Aenderung des Absorptionsspektrum bemerkbar.

Dieser Effekt ist nicht auf LB-Filme auf festen Trägern beschränkt. Er tritt auch in kristallinen Filmen oder bei Aggregationsformen der Verbindung der Formel I auf, bei denen Membran-Doppelschichten ausgebildet werden, beispielsweise Liposomen. Zur Herstellung thermochromer Schichten aus den Verbindungen der Formel I kommt also nicht nur das Langmuir-Blodgett Verfahren in Betracht.

Bei den molekularen Aggregaten aus Verbindungen der Formel I kann es sich um eine monomolekulare Schicht aus Verbindungen der Formel I oder aus Gemischen enthaltend mindestens 1 Gew.%, bezogen auf die Gesamtmischung, Verbindungen der Formel I in Kombination mit weiteren schichtbildenden amphiphilen Verbindungen auf einem festen Träger handeln.

Bei den molekularen Aggregaten aus Verbindungen der Formel I kann es sich auch um Systeme enthaltend Membran-Doppelschichten aus Verbindungen der Formel I oder aus Gemischen enthaltend mindestens 1 Gew.%, bezogen auf die Gesamtmischung, dieser Verbindungen in Kombination mit weiteren amphiphilen Verbindungen handeln.

Bevorzugt werden molekulare Aggregate, worin die Membran-Doppelschichten Multischichtsysteme sind, die nach der Langmuir-Blodgett Technik erhältlich sind.

Weitere bevorzugte molekulare Aggregate auf der Basis von Systemen enthaltend Membran-Doppelschichten sind Mischliposomen oder mikrokristalline Filme.

Die Erfindung betrifft also auch molekulare Aggregate aus Verbindungen der Formel I, die in Form von Mischliposomen, mikrokristallinen Filmen oder insbesondere Langmuir-Blodgett Schichten angeordnet sind.

Die molekularen Aggregate dieser Erfindung lassen sich zur Herstellung von ultradünnen Schichten mit solvato- und thermochromen Eigenschaften verwenden. Die Verbindungen der Formel I zeigen in Schichten angeordnet Thermochromie unterhalb ihres Schmelzpunktes. Der Effekt ist besonders bei den zweifach langkettig alkylsubstituierten Derivaten ausgeprägt. Neben der Thermochromie beobachtet man eine starke Abhängigkeit der Absorption der Aggregate von der Oberflächenbeschaffenheit der Unterlage. Die Schichten lassen sich also zur Visualisierung von Oberflächendefekten von festen Trägern verwenden.

Ferner beobachtet man eine Abhängigkeit der Absorption dieser Aggregate von pH-Wert der Umgebung. Die Schichten oder Systeme enthaltend Membran-Doppelschichten aus diesen Aggregaten lassen sich also auch als pH-Indikatoren verwenden.

Orientierte, nicht punktsymmetrisch angeordnete Verbindungen der Formel I, beispielsweise in Form von alternierenden LB-Schichten angeordnete Verbindungen der Formel I, zeigen nichtlineare optische

Eigenschaften. Bei der Uebertragung der monomolekularen Schichten nach dem LB-Verfahren werden die Verbindungen der Formel I ausgerichtet und es bilden sich optisch anisotrope Schichten. Diese können als Polarisatoren eingesetzt werden. Solche Dünnschicht-Polarisatoren sind bei der Herstellung von integrierten optischen Bauteilen von Interesse.

Die Erfindung betrifft also auch die Verwendung der molekularen Aggregate als Thermosensoren, zur Visualisierung von Oberflächendefekten auf festen Trägern oder als pH-Indikatoren, sowie die Verwendung der in Form von LB-Schichten angeordneten Verbindungen der Formel I als Polarisatoren.

Die folgenden Beispiele erläutern die Erfindung.

## Synthese der Verbindungen

### 1. Herstellung der Zwischenprodukte

#### Beispiel 1.1

Herstellung von 2,4-Dinitro-5-amino-N,N-(bis)-octadecylanilin

Eine Mischung von 1,2 g (6 mMol) 2,4-Dinitro-5-fluor-anilin (Fluka puriss.), 3,7 g (7,2 mMol) N,N-(bis)-octadecylamin (Fluka prakt.) und 1 g $NaHCO_3$ wird in 15 ml DMF (abs.)/Chloroform (abs.) (1:1) aufgeschlämmt und 90 Minuten bei 70°C gerührt. Nach dem Abkühlen wird mit Ether und Wasser/ges. Kochsalzlösung (1:1) versetzt und die etherische Phase noch zweimal mit Wasser/Kochsalzlösung extrahiert. Die etherische Phase wird mit $MgSO_4$ getrocknet, das Lösungsmittel abdestilliert und der Rückstand über die 50-fache Menge Kieselgel mit Hexan/Ether (8:1) als Laufmittel chromatographiert. Man erhält 3,1 g (71% der Therorie) einer gelborangen wachsartigen Substanz.

Schmelzpunkt: 53—56°C; $R_f$ (Kieselgel, Hexan/Ether [1:1]): 0,78.

Elementaranalyse:

Gef.: C 71,33%; H 11,10%; N 8,20%;
Ber.: C 71,75%; H 11,18%; N 7,97%.

#### Beispiel 1.2

Herstellung von 2,4-Dinitro-5-amino-N,N-bisdocosylanilin

Es wird wie in Beispiel 1.1. verfahren. Anstelle des N,N-Bisoctadecylamins wird N,N-Bisdocosylamin*) eingesetzt. Nach Chromatographie wird eine gelbe, mikrokristalline Substanz erhalten (Ausbeute: 47% der Theorie; Schmelzpunkt 82—83°C).

Elementaranalyse:

Ber. für $C_{50}H_{94}N_4O_4$ (MW 815,33): 73,66% C; 11,62% H; 6,87% N;
Gef.: 73,68% C; 11,68% H; 6.75% N.

#### Beispiel 1.3

Herstellung von 2,4-Dinitro-5-amino-N,N-methyldocosylanilin

Es wird wie in Beispiel 1.1. verfahren. Anstelle des N,N-Bisoctadecylamins wird N,N-Methyl-docosylamin*) eingesetzt. Zur Reinigung wird das Rohprodukt nicht chromatographiert, sondern mehrfach aus Ethanol umkristallisiert. Es werden gelbe Kristalle erhalten (Ausbeute: 49% der Theorie; Schmelzpunkt 87—89°C).

Elementaranalyse:

Ber. für $C_{29}H_{52}N_4O_4$ (MW 520,76): 66,89% C; 10,07% H; 10,76% N;
Gef.: 66,28% C; 9,95% H; 10,84% N.

#### Beispiel 1.4

Herstellung von 2,4-Dinitro-5-amino-N-docosylanilin

Es wird wie in Beispiel 1.1. verfahren. Anstelle des N,N-Bisoctadecylamins wird 1-Docosylamin*) eingesetzt. Zur Reinigung wird das Rohprodukt nicht chromatographiert, sondern mehrfach aus Ethanol umkristallisiert. Es wird ein gelber, mikrokristalliner Feststoff erhalten (Ausbeute: 85% der Theorie; Schmelzpunkt 108—110°C).

Elementaranalyse:

Ber. für $C_{28}H_{50}N_4O_4$ (MW 506,74): 66,37% C; 9,95% H; 11,06% N;
Gef.: 66,36% C; 10,00% H; 11,02% N.

*) Die Herstellung der langkettigen Amine erfolgt durch Reduktion der entsprechenden Säureamide mit $LiAlH_4$ in Tetrahydrofuran nach Standardverfahren. Die Säureamide werden über die Säurechloride hergestellt. Alle Amine werden vor der Reaktion mehrfach aus Ethanol umkristallisiert.

### 2. Herstellung der Azoverbindungen

#### Beispiel 2.1

Herstellung von 2,4-Dinitro-5-N,N-(bis)octadecylamino-4'-N',N'-dimethylamino-azobenzol

1,0 g (1,4 mMol) 2,4-Dinitro-5-amino-N,N-(bis)-octadecylanilin werden in 50 ml Diethylether unter

leichtem Erwärmen gelöst und unter heftigem Rühren auf −5°C abgekühlt, wobei ein Teil der Substanz feinkristallin ausfällt. Bei −5° bis 0°C werden 0,34 g konz. $H_2SO_4$ (kalt gelöst in 5 ml Ether) zugetropft. Es entsteht eine gelbe Suspension, die noch 10 Minuten bei 0°C weitergerührt wird. Bei 0°C werden 0,18 g (1,5 mMol) Isoamylnitrit (Fluka purum) in 5 ml Ether zugetropft, wobei eine stark gefärbte braunrote Suspension entsteht. Diese wird noch 30 Minuten bei 0°C gerührt. Anschliessend werden 0,85 g (7 mMol) Dimethylanilin (Fluka puriss.) bei 0°C zugetropft und nochmals 30 Minuten bei 0°C und 60 Minuten bei Raumtemperatur weitergerührt. Es wird mit 50 ml Ether versetzt und zweimal mit 2N HCl sowie zweimal mit Wasser extrahiert, mit $MgSO_4$ getrocknet und der Ether abdestilliert. Das Rohprodukt wird über die 100-fache Menge Kieselgel mit Hexan und die hierbei erhaltenen roten Fraktionen ein zweites Mal mit Hexan/Ether 98:2 chromatographiert. Man erhält 240 mg (21% der Theorie) einer tiefroten wachsartigen Substanz.

$R_f$ (Kieselgel, Hexan/Ether [2:1]): 0,52.

Elementaranalyse:

Gef. C 71,68%; H 10,28%; N 10,13%;

Ber. C 71,90%; H 10,38%; N 10,06%.

NMR-Spektren zeigen, dass bei der Azokupplung ausschliesslich die Verbindung 2,4-Dinitro-5-N,N-(bis)octadecylamino-4'-N',N'-dimethylamino-azobenzol und kein anderes Isomer entsteht.

Physikalische Daten:

Differentialkalorimetrie (1 K/Min) Schmelzpunkt 36°C
Erstarrungspunkt 3°C

danach reversibler Polymorphismus beim Aufheizen:

1.) endothermer Uebergang 9°C

2.) exothermer Uebergang 11°C

3.) exothermer Uebergang 27°C

4.) endothermer Uebergang 36°C (Schmelzpunkt).

Beispiel 2.2

Herstellung von 2,4-Dinitro-5-N,N-bisdocosylamino-4'-N',N'-dimethylamino-azobenzol

Es wird wie in Beispiel 2.1. verfahren. Anstelle von 2,4-Dinitro-5-amino-N,N-bisoctadecylanilin wird das entsprechende Anilinderivat aus Beispiel 1.2. eingesetzt. Es wird eine tiefrote, wachsartige Substanz erhalten (Ausbeute: 22% der Theorie; Schmelzpunkt 59—62°C).

Elementaranalyse:

| | | | |
|---|---|---|---|
| Ber. für $C_{58}H_{102}N_6O_4$ (MW 947,49): | 73,52% C; | 10,85% H; | 8,87% N; |
| Gef.: | 73,50% C; | 10,87% H; | 8,62% N. |

Beispiel 2.3

Herstellung von 2,4-Dinitro-5-N,N-methyldocosylamino-4'-N',N'-dimethylamino-azobenzol

Es wird wie in Beispiel 2.1. verfahren. Anstelle von 2,4-Dinitro-5-amino-N,N-bisoctadecylanilin wird das Anilinderivat aus Beispiel 1.3. eingesetzt. Es werden eine rote Kristalle erhalten (Ausbeute: 31% der Theorie; Schmelzpunkt 76—79°C).

Elementaranalyse:

| | | | |
|---|---|---|---|
| Ber. für $C_{37}H_{60}N_6O_4$ (MW 652,92): | 68,06% C; | 9,26% H; | 12,87% N; |
| Gef.: | 67,71% C; | 9,32% H; | 12,64% N. |

Beispiel 2.4

Herstellung von 2,4-Dinitro-5-N-docosylamino-4'-N',N'-dimethylamino-azobenzol

Es wird wie in Beispiel 2.1. verfahren. Anstelle von 2,4-Dinitro-5-amino-N,N-bisoctadecylanilin wird das Anilinderivat aus Beispiel 1.4. eingesetzt. Zur Reinigung wird das Rohprodukt über die 100-fache Menge Kieselgel mit Hexan/Ether (9:1) als Laufmittel chromatographiert. Es wird ein roter Feststoff enthalten (Ausbeute: 6% der Theorie; Schmelzpunkt 86—88°C).

Elementaranalyse:

| | | | |
|---|---|---|---|
| Ber. für $C_{36}H_{50}N_6O_4$ (MW 630,84): | 68,54% C; | 7,99% H; | 13,32% N; |
| Gef.: | 67,16% C; | 9,02% H; | 13,19% N. |

Herstellung von dünn Schichten und Liposomen

Beispiel 3

Herstellung von Mono- und LB-Multischichten

Zur Herstellung von Monoschichten auf der Wasser/Gas-Grenzfläche wird eine präparative Lauda Filmwaage benutzt. Das benötigte hochreine Wasser wird frisch mit einer Milli-Q Anlage der Firma Millipore hergestellt. Der monomolekulare Film wird durch Auftropfen einer Spreitlösung [25,85 mg 2,4-Dinitro-5-N,N-(bis)octadecylamino-4'-N',N'-dimethylamino-azobenzol in 25 ml $CHCl_3$ (Merck Uvasole)] auf die Wasseroberfläche nach Standard-techniken hergestellt. Jeweils nach Verdampfen des Lösungsmittels werden Schub/Flächendiagramme bei verschiedenen Temperaturen registriert. Die Substanz bildet auf reinem Wasser stabile Monoschichten zwischen 5° und 35°C. Bei 20°C beträgt die Kollaps-Fläche 0,49 $nm^2$/ Molekül, der Kollaps-Druck beträgt 20 mN/m. Bei 20°C wird die Monoschicht bei einem Oberflächendruck von 16 mN/m auf feste Träger übertragen. Dazu wird eine Quarzplatte (Suprasil), die vorher mit Octadecyltrichlorsilan hydrophobisiert wurde, mit einer Geschwindigkeit von 4 cm/min durch die Monoschicht getaucht und wieder herausgezogen. Der Prozess wird 15 mal wiederholt. Man erhält auf diese Weise dünne LB-Filme von 2,4-Dinitro-5-N,N-(bis)octadecylamino-4'-N',N'-dimethylamino-azobenzol, die zunächst tief blau-violett gefärbt sind und die bei Lagerung bei Raumtemperatur in eine rötlichere Modifikation übergehen. Die längstwellige Absorption der frisch präparierten Schicht liegt bei 562 nm. Die durch Lagern bei Raumtemperatur erhaltene Modifikation hat ein $\lambda_{max}$ von 540 nm. Der mit Röntgenkleinwinkelstreuung ermittelte Schichtabstand zweier Doppelschichten beträgt 5,20 ± 0,02 nm. Eine aus 15 Doppelschichten hergestellte Probe ist somit 78 nm dick.

### Beispiel 4

Herstellung von dünnen Kristallfilmen

15 mg 2,4-Dinitro-5-N,N-(bis)octadecylamino-4'-N',N'-dimethylamino-azobenzol werden auf einer mit Octadecyltrichlorsilan hydrophobisierten Quarzplatte auf einem Heiztisch aufgeschmolzen und mit einer zweiten ebenfalls hydrophobisierten Quarzplatte bedeckt. Die beiden Platten werden oberhalb des Schmelzpunktes so lange gegeneinander gepresst, bis sich die Substanz als dünner Film verteilt hat, den man erkalten lässt.

### Beispiel 5

Herstellung von Mischliposomen

Man wiegt 8 mg Dioctadecyldimethylammoniumbromid und 2 mg 2,4-Dinitro-5-N,N-(bis)octadecylamino-4'-N',N'-dimethylamino-azobenzol zusammen ein und löst in 10 ml $CHCl_3$ auf. Von dieser Lösung werden 2 ml in ein Reagenzglas übergeführt und durch Verblasen des Lösungsmittels im Stickstoffstrom ein Film an der Glaswand abgeschieden. Dieser wird 30 Minuten bei 0,1 mbar nachgetrocknet. Man versetzt mit 1 ml Milli-Q Wasser und ultrabeschallt 15 min bei 60°C unter Einleiten von Stickstoff. Man erhält eine rote, leicht opake Lösung.

Farbänderungen

### Beispiel 6

Thermochromie im Kristallfilm

Das UV-Spektrum von 2,4-Dinitro-5-N,N-(bis)octadecylamino-4'-N',N'-dimethylamino-azobenzol weist im Kristallfilm zwischen 200 und 800 nm 3 charakteristische Banden auf. $\lambda_{max}$ beträgt 525 nm bei 20°C. Durch sukzessives Aufheizen auf 50°C wird $\lambda_{max}$ auf 467 nm bei etwa gleicher Extinktion verschoben. Es treten 3 isosbestische Punkte bei 497, 368 und 294 nm auf. Die Farbänderungen beim Aufheizen und Abkühlen sind viele Male reversibel.

### Beispiel 7

Thermochromie in LB-Multischichten

Beim sukzessiven Aufheizen einer frisch präparierten Multischicht von 40 Doppelschichten des 2,4-Dinitro-5-N,N-(bis)octadecylamino-4'-N',N'-dimethylamino-azobenzols verschiebt sich $\lambda_{max}$ von 562 nm bei 18°C auf 480 nm bei 36°C. Beim Abkühlen auf 20°C verschiebt sich $\lambda_{max}$ auf 540 nm. Die Farbänderungen beim Aufheizen und Abkühlen sind viele Male zwischen 540 und 480 nm reversibel, beim Aufheizen über 36°C wird die Multischicht zerstört.

### Beispiel 8

Farbänderungen in LB-Multischichten durch Einwirkung eines HCl/Luft-Gemisches

Wird eine bei Raumtemperatur gelagerte Multischicht von 2,4-Dinitro-5-N,N-(bis)octadecylamino-4'-N',N'-dimethylamino-azobenzol einem HCl/Luft-Gemisch kurzzeitig ausgesetzt, so verschiebt sich $\lambda_{max}$ von 540 nm auf 480 nm. Durch Stehenlassen in reiner Luft verschiebt sich $\lambda_{max}$ wieder auf 540 nm. Die Farbänderungen in HCl/Luft Gemischen können viele Male wiederholt werden.

### Beispiel 9

Farbänderungen in LB-Multischichten durch Einwirkung eines $CH_2Cl_2$/Luft-Gemisches

Wird eine bei Raumtemperatur gelagerte Multischicht von 2,4-Dinitro-5-N,N-(bis)octadecylamino-4'-N',N'-dimethylamino-azobenzol einem $CH_2Cl_2$/Luft-Gemisch kurzzeitig ausgesetzt, so verschiebt sich $\lambda_{max}$ von 540 nm auf 480 nm. Durch Stehenlassen in reiner Luft verschiebt sich $\lambda_{max}$ wieder auf 540 nm.

### Beispiel 10

Visualisierung von Defekten in LB-Multischichten

Wird zur Herstellung von Multischichten ein Träger mit Mikrodefekten verwendet (Staubkörner,

unvollständige oder schlechte Hydrophobisierung), so erhält man nach Aufziehen von 2,4-Dinitro-5-N,N-(bis)octadecylamino-4'-N',N'-dimethylamino-azobenzol violette LB-Multischichten, die um die Defekte herum hellrot erscheinen. Da die hellroten Zonen um ein Vielfaches die Fläche des Defektes (z.B. Staubkorn) übertreffen, sind Defekte einfacher zu visualisieren, zum Teil schon mit blossem Auge.

Beispiel 11

Optische Anisotropie von LB-Multischichten

Es wird eine LB-Multischicht von 40 Doppelschichten Dicke aus 2,4-Dinitro-5-N,N-(bis)octadecylamino-4'-N',N'-dimethylamino-azobenzol analog Beispiel 3 hergestellt. Die Multischicht besitzt nach Lagerung bei Raumtemperatur ein Absorptionsmaximum bei $\lambda$ = 540 nm. In Tauchrichtung beträgt die optische Dichte des Absorptionsmaximums $OD_{540}$ ( ‖ ) = 0,50; senkrecht zur Tauchrichtung beträgt die optische Dichte $OD_{540}$ ($\perp$) = 0,19. Die Schichten eignen sich daher als Polarisator.

**Patentansprüche**

1. Verbindungen der Formel I

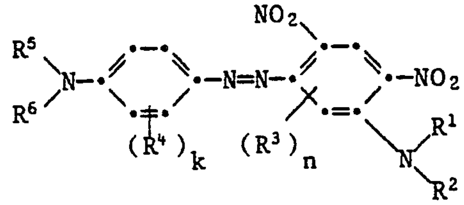

(I),

worin $R^1$ $C_{12}$—$C_{30}$Alkyl ist, $R^2$ Wasserstoff oder $C_1$—$C_{30}$Alkyl bedeutet, $R^3$ $C_1$—$C_3$Alkyl oder $C_1$—$C_3$Alkoxy ist, $R^4$ eine der Bedeutungen von $R^3$ annehmen kann oder Halogen ist, k und n unabhängig voneinander 0, 1 oder 2 sind und $R^5$ und $R^6$ unabhängig voneinander $C_1$—$C_4$Alkyl sind, wobei irgendwelche Alkylreste auch teil- oder perfluoriert sein können, mit der Massgabe, dass $R^1$ Alkyl mit wenigstens 18 C-Atomen ist, wenn $R^2$ Wasserstoff oder Alkyl mit weniger als 12 C-Atomen bedeutet.

2. Verbindungen gemäss Anspruch 1, worin $R^1$ und $R^2$ unabhängig voneinander n-$C_{16}$—$C_{26}$Alkyl sind und $R^5$ und $R^6$ Methyl bedeuten.

3. Verbindungen der Formel I gemäss Anspruch 1, worin $R^1$ und $R^2$ unabhängig voneinander ein Rest der Formel —$C_qH_{2q+1}$ sind und q eine ganze Zahl von 16—26 bedeutet.

4. Verbindungen gemäss Anspruch 3, worin q eine ganze Zahl von 18—22 ist.

5. Verbindungen der Formel II

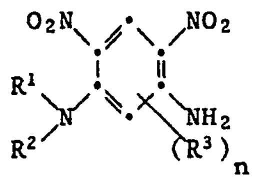

(II),

worin $R^1$, $R^2$, $R^3$ und n die in Anspruch 1 definierte Bedeutung besitzen.

6. Verfahren zur Herstellung von Mono- oder Multischichtsystemen umfassend die Schritte

i) Herstellung einer monomolekularen Schicht einer Verbindung der Formel I gemäss Anspruch 1 oder eines Gemisches aus mindestens 1 Gew.%, bezogen auf die Gesamtmischung, dieser Verbindung in Kombination mit weiteren zur Ausbildung von stabilen monomolekularen Schichten befähigten amphiphilen Verbindungen und

ii) Uebertragung dieser Schicht auf einen festen Träger gemäss dem Langmuir-Blodgett Verfahren durch ein- oder mehrfaches Ein- und/oder Austauchen besagten Trägers durch die Schicht.

7. Verfahren zur Herstellung von Mischliposomen umfassend die Schritte

i) Einbringen einer Lösung einer Verbindung der Formel I gemäss Anspruch 1 in Kombination mit weiteren liposomenbildenden Verbindungen in ein wässriges Medium,

ii) Erzeugen eines homogenen Films aus dem liposomenbildenden Material durch Verdampfen des Lösungsmittels,

iii) Behandlung der Anordnung mit Ultraschall oder Quellung der liposomenbildenden Materialien oberhalb der Phasenumwandlungstemperatur, so dass sich Liposomen bilden und

iv) gegebenenfalls Uebertragung der Lösung auf einen festen Träger und Verdampfen des Wassers, so dass ein zusammenhängender Film aus Mischliposomen ("Cast Bilayer" Film) entsteht.

8. Verfahren zur Herstellung von mikrokristallinen Filmen umfassend die Schritte

i) Aufbringen einer Verbindung der Formel I gemäss Anspruch 1 auf einen festen Träger,

ii) Aufschmelzen der Verbindung der Formel I,

iii) Kontaktieren dieser Anordnung mit einem zweiten festen Träger, so dass ein dünner Flüssigkeitsfilm zwischen besagten Trägern entsteht und

iv) Abkühlen des zusammengepressten Films unterhalb des Schmelzpunktes der Verbindung der Formel I.

9. Molekulare Aggregate aus Verbindungen der Formel I gemäss Anspruch 1, die in Form von Mischliposomen, mikrokristallinen Filmen oder Langmuir-Blodgett Schichten angeordnet sind.

10. Molekulare Aggregate gemäss Anspruch 9, worin die molekularen Aggregate in Form von Multischichtsystemen angeordnet sind, die nach der Langmuir-Blodgett Technik erhältlich sind.

11. Verwendung der molekularen Aggregate gemäss Ansprüchen 9 oder 10 als Thermosensoren, zur Visualisierung von Oberflächendefekten auf festen Trägern oder als pH-Indikatoren.

12. Verwendung der molekularen Aggregate gemäss Anspruch 10 als Polarisatoren.

**Revendications**

1. Composés répondant à la formule I:

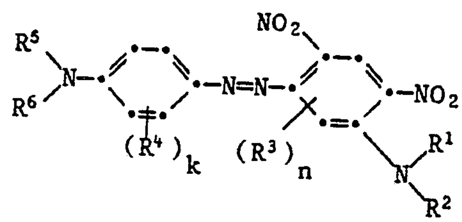

(I),

dans laquelle $R^1$ représente un alkyle en $C_{12}$—$C_{30}$, $R^2$ l'hydrogène ou un alkyle en $C_1$—$C_{30}$, $R^3$ un alkyle en $C_1$—$C_3$ ou un alcoxy en $C_1$—$C_3$, $R^4$ peut prendre l'une des significations de $R^3$ ou représente un halogène, k et n représentent chacun, indépendamment l'un de l'autre, un nombre égal à 0, à 1 ou à 2, et $R^5$ et $R^6$ représentent chacun, indépendamment l'un de l'autre, un alkyle en $C_1$—$C_4$, les radicaux alkyles, quels qu'ils soient, pouvant également être fluorés partiellement ou totalement, avec la condition que $R^1$ représente un alkyle à au moins 18 atomes de carbone lorsque $R^2$ représente l'hydrogène ou un alkyle contenant moins de 12 atomes de carbone.

2. Composés selon la revendication 1 dans lesquels $R^1$ et $R^2$ représentent chacun, indépendamment l'un de l'autre, un alkyle linéaire en $C_{16}$—$C_{26}$, et $R^5$ et $R^6$ chacun un radical méthyle.

3. Composés de formule I selon la revendication 1 dans lesquels $R^1$ et $R^2$ représentent chacun, indépendamment l'un de l'autre, un radical de formule —$C_qH_{2q+1}$ et 1 désigne un nombre entier de 16 à 26.

4. Composés selon la revendication 3 dans lesquels q désigne un nombre entier de 18 à 22.

5. Composés répondant à la formule II:

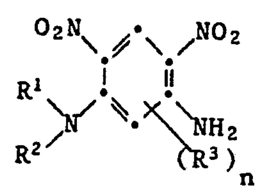

(II),

dans laquelle $R^1$, $R^2$, $R^3$ et n ont les significations qui leur ont été données à la revendication 1.

6. Procédé pour préparer des systèmes monocouches ou multicouches, procédé qui comprend les étapes suivantes:

i) on crée une couche monomoléculaire d'un composé de formule I selon la revendication 1 ou d'un mélange constitué d'au moins 1% en poids, par rapport au mélange total, d'un tel composé en association avec d'autres composés amphiphiles capables de former des couches monomoléculaires stables, et

ii) on transfère cette couche sur un support solide selon la méthode de Langmuir-Blodgett en plongeant et/ou en extrayant ledit support à travers la couche une ou plusieurs fois.

7. Procédé pour fabriquer des liposomes mixtes, procédé qui comprend les étapes suivantes:

i) on introduit dans un milieu aqueux une solution d'un composé de formule I selon la revendication 1 associé à d'autres composés générateurs de liposomes,

ii) on crée, par évaporation du solvant, une pellicule homogène constituée de la matière génératrice de liposomes,

iii) on traite l'ensemble par un ultrason, ou on fait gonfler les matières génératrices de liposomes au-dessus de la température de changement de phase, de telle façon qu'il se forme des liposomes, et

iv) on transfère éventuellement la solution sur un support solide et on évapore l'eau de felle façon qu'il se forme une pellicule continue constituée de liposomes mixtes (pellicule "Cast Bilayer").

8. Procédé de fabrication de pellicules microcristallines, procédé qui comprend les étapes suivantes:

i) on applique un composé de formule I selon la revendication 1 sur un support solide,

ii) on fond le composé de formule I,

iii) on met cet ensemble en contact avec un deuxième support solide, de préférence hydrophobe, de telle façon qu'il se forme une mince pellicule liquide entre lesdits supports, et

iv) on refroidit la pellicule comprimée au-dessous du point de fusion du composé de formule I.

9. Agrégats moléculaires de composés de formule I selon la revendication 1, qui sont disposés sous la forme de liposomes mixtes, de pellicules microcristallines ou de couches de Langmuir-Blodgett.

10. Agrégats moléculaires selon la revendication 9 dans lesquels les agrégats moléculaires sont disposés sous la forme de systèmes multicouches qui peuvent être obtenus par la technique de Langmuir-Blodgett.

11. Application des agrégats moléculaires selon l'une des revendications 9 et 10 comme thermodétecteurs, pour la visualisation de défauts de surface sur des supports solides ou comme indicateurs de pH.

12. Application des agrégats moléculaires selon la revendication 10 comme polariseurs.

**Claims**

1. A compound of formula I

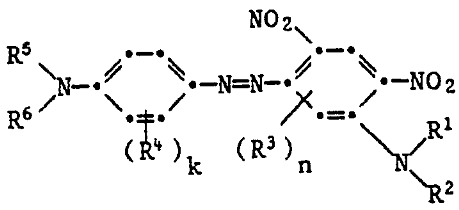

(I),

in which $R^1$ is $C_{12}$—$C_{30}$alkyl, $R^2$ is hydrogen or $C_1$—$C_{30}$alkyl, $R^3$ is $C_1$—$C_3$alkyl or $C_1$—$C_3$ alkoxy, $R^4$ may have one of the meanings of $R^3$ or is halogen, k and n are each independently of the other 0, 1 or 2, and $R^5$ and $R^6$ are each independently of the other $C_1$—$C_4$alkyl, any of which alkyl radicals may also be partly fluorinated or perfluorinated, with the proviso that $R^1$ is alkyl of not less than 18 carbon atoms if $R^2$ is hydrogen or alkyl of less than 12 carbon atoms.

2. A compound according to claim 1, in which $R^1$ and $R^2$ are each independently of the other n-$_{16}$—$C_{26}$alkyl and $R^5$ and $R^6$ are methyl.

3. A compound of formula I according to claim 1, in which $R^1$ and $R^2$ are each independently of the other a radical of formula —$C_qH_{2q+1}$ and q is an integer from 16 to 26.

4. A compound according to claim 3, in which q is an integer from 18 to 22.

5. A compound of formula II

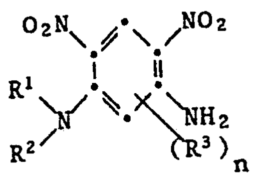

(II),

in which $R^1$, $R^2$, $R^3$ and n are as defined in claim 1.

6. A process for the preparation of monolayer or multilayer systems, comprising the steps of

i) preparing a monomolecular layer of a compound of formula I according to claim 1 or of a mixture of at least 1% by weight, based on the total mixture, of this compound in conjunction with further amphiphilic compounds capable of forming stable monomolecular layers, and

ii) transferring this layer onto a solid substrate by the Langmuir-Blodgett method by single or repeated emersion and/or withdrawal of said substrate through the layer.

7. A process for the preparation of mixed liposomes, comprising the steps of

i) introducing a solution of a compound of formula I according to claim 1 in conjunction with further liposome-forming compounds into an aqueous medium,

ii) producing a homogeneous film of the liposome-forming material by evaporation of the solvent,

iii) treating the assembly with ultrasound or swelling the liposome-forming materials above the phase transition temperature, so that liposomes form, and

iv) optionally transferring the solution onto a solid substrate and evaporating the water, so that a coherent film of mixed liposomes (cast bilayer film) is formed.

8. A process for the preparation of microcrystalline films, comprising the steps of

i) applying a compound of formula I according to claim 1 to a solid substrate,

ii) fusing the compound of formula I,

iii) contacting this assembly with a second solid substrate, so that a thin liquid film is formed between said substrates, and

iv) cooling the compressed film to below the melting point of the compound of formula I.

9. Molecular aggregates of compounds of formula I according to claim 1, which are assembled in the form of mixed liposomes, microcrystalline films or Langmuir-Blodgett layers.

10. Molecular aggregates according to claim 9, in which the molecular aggregates are assembled in the form of multilayer systems that are obtainable by the Langmuir-Blodgett technique.

11. Use of the molecular aggregates according to either of claims 9 and 10 as thermosensors or for the visual assessment of defects on the surfaces of solid substrates or as pH indicators.

12. Use of the molecular aggregates according to claim 10 as polarisers.